# EUROPEAN PATENT APPLICATION

(11) **EP 1 092 347 A1**
(43) Date of publication of application: **18.04.2001**
(21) Application number: 00308978.6
(22) Date of filing: 12.10.2000
(51) Int. Cl.: A01K 45/00

(54) **Method of automatic sexing of chicks**

(30) Priority: 12.10.1999 US 416262
(71) Applicant: Efrochan (1997) Ltd., Or Akiva 30600 (IL)
(72) Inventor: Yavnai, Amotz, Kiryat Motzkin 26361 (IL); Ehrlich, Sharon, Moshav Beit Herut 40291 (IL)
(74) Representative: Bankes, Stephen Charles Digby

(57) **Abstract**

A method and apparatus for automatic sexing of a one-day-old chick (10) which includes inducing the chick to lose its equilibrium and voluntarily spread its wings. An example of an apparatus which causes chick disequilibrium includes a cup (40) with a rim (42), a funnel (38) removably seated on the rim, and a free-rolling ball (43) inside the cup. A second example of such an apparatus includes a conveyor belt, a mechanical vibrator attached to the surface of the conveyor belt, and two poles for supporting the spread wings. A third example of such an apparatus includes a passageway enclosed on both sides whose bottom is attached to an oscillator. The wings are caused to be spread so that chick sexing can be performed by photographing the chick, applying appropriate image processing to the photograph, identifying the sex of the chick from the processed photograph, weighing the chick, and processing chicks based on sex and weight. Preferably, the chick is photographed in blue light, using a digital camera (48).

## Description

### FIELD AND BACKGROUND OF THE INVENTION

The present invention relates to a method of chick sexing of a one-day-old chick, and, more particularly, to a method of causing a chick's wings to spread automatically for a sufficient length of time so that chick sexing can be performed.

In egg-laying chicks, early determination of a chick's sex is essential for correct processing. In broiler chicks, processing based on sex is also desirable. The wing feathers vary between males and females. Therefore examination of the tips of the wings provides a means of sex identification.

Various attempts have been made to determine the sex of the chick. Most prior art specifies manual methods. These methods are labor intensive, require significant training, and are prone to human error. Although prior art recognizes that the inspection of chicks provide the sex of the chick, for example U.S. Pat. No. 3,704,688 dated Dec. 5, 1972, no explanation is given on how the spreading of the wings takes place. Suzuki (U.S. Pat. No. 4,417,663 dated Nov. 29, 1983) describes an automated method of determining the sex of a chick through the examination of the anal region. However, sex determination based on wing tips is not included.

There is thus a widely recognized need for, and it would be highly advantageous to have a way to automate the spreading of the chicks' wings, which in turn would allow a fully automated sex identification and sorting process based on the examination of wing tips.

### SUMMARY OF THE INVENTION

According to the present invention there is provided a method of sexing a chick including the step of : (a) causing the chick to lose equilibrium, thereby voluntarily spreading its wings; (b) shining a light on at least one spread wing; and (c) photographing at least one spread wing;

The invention preferably includes the further steps of:
(d) inferring the chick's sex from the photograph;
(e) weighing the chick; and
(f) processing the chick based on sex and weight.

The method of the present invention is a major advance towards the goal of efficient chick sexing. By causing a chick is to spread its wings automatically, rather than having its wings spread open manually, labor requirements are reduced. The chick sexing process can then be fully automated, eliminating the reliance on the skill of a human sex checker, and enabling consistent quality. In addition, the process can be carried out at a constant rate, uninterrupted, for 24 hours each day. The procedure for handling chicks of unidentifiable sex, minimizes the negative consequences of incorrect sex sorting, thereby maintaining the integrity of the sexing process.

Disequilibrium can result from certain actions, including but not limited to, removing a chick's foot support, placing the chick on a moving, vibrating, or unstable surface, causing the chick to jump, shaking the chick, shocking the chick with an electric voltage or acoustic noise, and warming the chick.

An example of an apparatus which causes chick disequilibrium includes: (a) a cup having a rim; (b) a funnel removably seated on the rim; and (c) a ball inside the rim and free to roll inside the cup.

A second example of an apparatus used to cause a chick to lose equilibrium and spread its wings includes:(a) a conveyer belt for transporting the chick in a certain direction; (b) a mechanical vibrator for vibrating a surface of the conveyer belt whereon the chick stands; and (c) two poles substantially parallel to the direction, for supporting the spread wings.

Preferably, the poles in the second apparatus are sloped relative to the conveyer belt.

A third example of an apparatus used to cause a chick to lose equilibrium and spread its wings, includes:(a) a bottom surface whereon the chick stands; (b) a mechanism for oscillating the bottom surface; and (c) two side surfaces attached to the bottom surface for supporting the spread wings.

Although the scope of the present invention includes the use of any light for illuminating the wing, the preferred color is blue, to enhance the contrast between the white wing tips and yellow body of a chick.

Although the scope of the present invention includes the use of any camera, the preferred camera is digital.

The present invention successfully addresses the shortcomings of the presently known configurations by providing a means to permit full automation of chick sexing based on wing feather patterns.

### BRIEF DESCRIPTION OF THE DRAWINGS

The invention is herein described, by way of example only, with reference to the accompanying drawings, wherein:
FIG. 1 is a pair of photographs of typical male and female chicks' wing feather patterns;
FIG. 2 is a flow chart of an automated sex identification and sorting process based on wing feather patterns;
FIG. 3 is a schematic top plan view of the chick processing system;
FIG. 4 is an illustration of causing chick disequilibrium by removing the chick's foot support;
FIG. 5 is an illustration of front and side views of a conveyer belt used in causing chick disequilibrium;
FIG. 6 is an illustration of front and side views of a passageway used in causing chick disequilibrium;
FIG. 7 is an illustration of causing chick disequilibrium by electric shock;
FIG. 8 is an illustration of causing chick disequilibrium by acoustic shock.
FIG. 9 is an illustration of causing chick disequilibrium by heat

### DESCRIPTION OF THE PREFERRED EMBODIMENTS

The present invention is of an automatic means of causing a chick to spread its wings due to its loss of equilibrium, thereby exposing its tip wing feathers. Specifically, the present invention can be used as part of a fully automated chick sex screening process for one-day-old chicks, reducing training, labor requirements and the impact of human error, while enhancing efficiency, throughput, and quality consistency.

The principles and operation of a mechanism to automatically induce the spreading of a chick's wings according to the present invention may be better understood with reference to the drawings and the accompanying description.

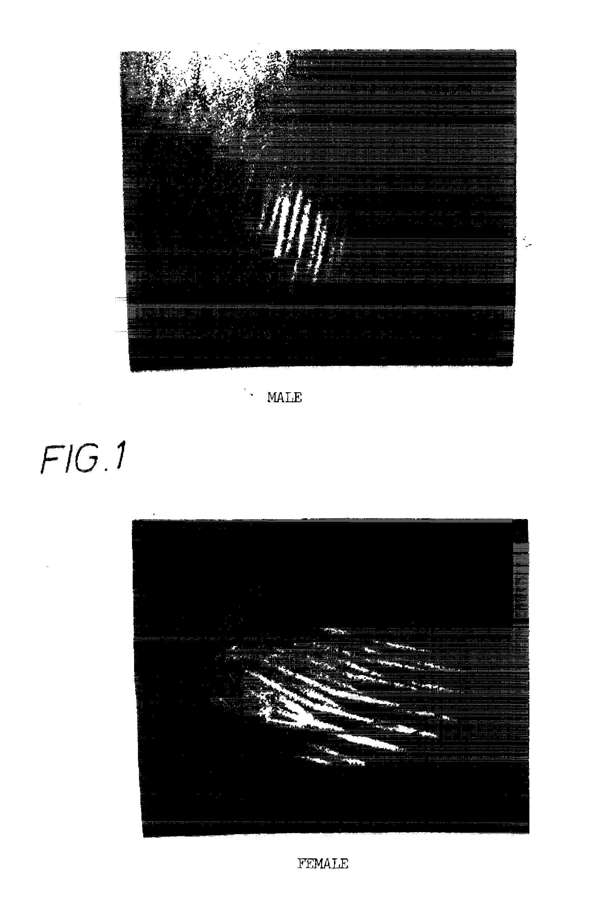

Referring now to the drawings, Figure **1** illustrates the typical male and female patterns of wing feathers. It is apparent that wing feathers' makeup constitutes a sex-distinguishable characteristic among chicks.

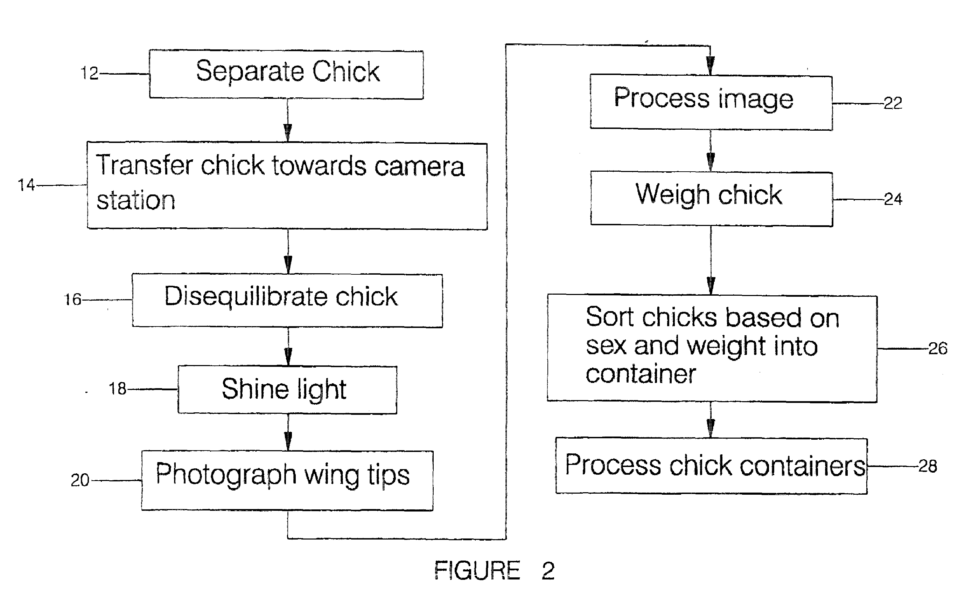

A flow chart of a fully automated process of sex identification and sorting is shown in Figure 2. A chick is separated from the other chicks (box **12**) and transferred by conveyer towards the camera station (box **14**). A mechanism to cause disequilibrium of the chick is applied (box **16**), prompting the chick to spread its wings and hold the position long enough for a photograph to be taken.

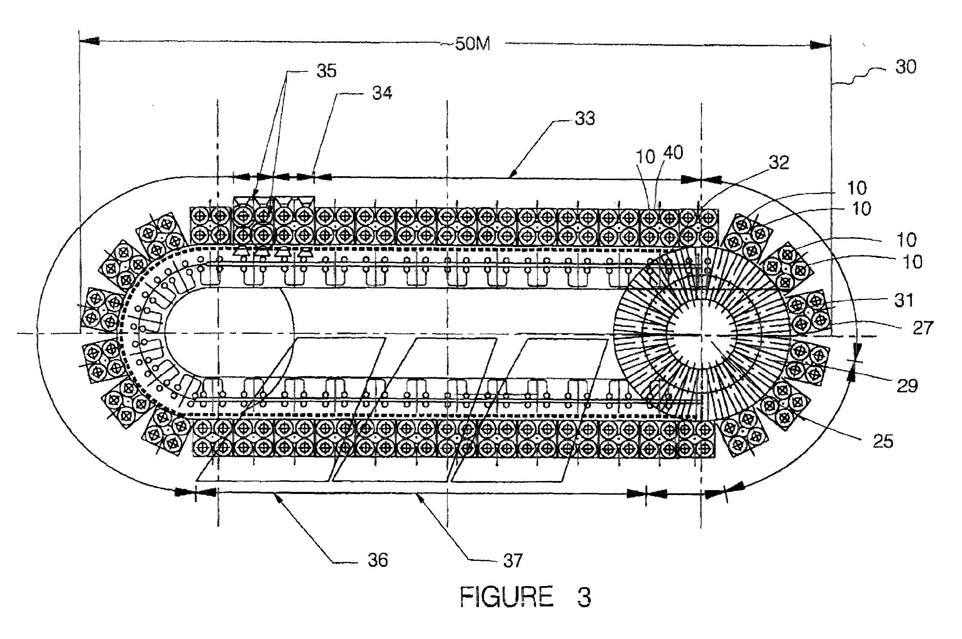

Figure **3** shows a schematic plan of one type of a chick processing system **30** of the present invention. A round carousel **31** on the right of system **30** is bounded by an endless chain **32**. Endless chain **32** contains a straight section **33** leading to the disequilibrium point **34** and to one or more camera stations **35**, of which two are shown in Figure 3. On the other side of camera stations **35**, endless chain **32** curves around and loops back to carousel **31**.

Carousel **31** with one or more channels **29** spins around. Chicks **10** are placed in center **25** of carousel **31**, slip into channels **29**, and at the appropriate moment, one or more chicks **10** are deposited into one or more cups **40**. In Figure 3, four cups **40** are shown connected together to form one unit **27**. Units **27** of chicks **10** are transported by endless chain **32** towards disequilibrium point **34** where chicks **10** are caused to lose their equilibrium and to two camera stations **35** where photographs are taken simultaneously of two chicks **10**. Straight section **33** prevents centrifugal forces from acting on chicks **10** prior to the picture taking. Endless chain **32** continues to transport units **27** of chicks **10** to the weighing station **36** and the sorting area **37**.

Chick disequilibrium can be caused by any number of methods, including but not limited to: removing the chick's foot support, placing the chick on a moving, vibrating, or unstable surface, inducing the chick to jump, shaking the chick, shocking the chick with an electric voltage or acoustic noise, and warming the chick.

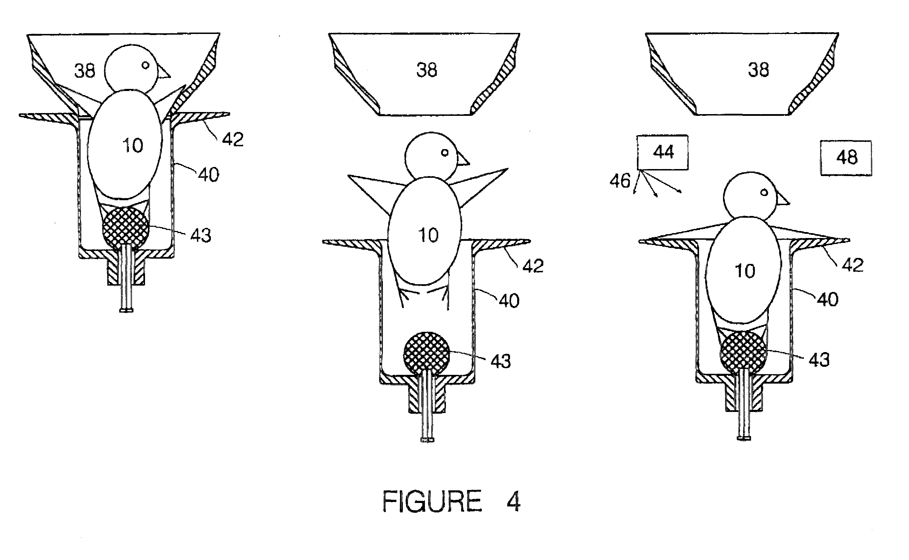

Figure 4 illustrates an example of a method of causing chick disequilibrium by placing chick **10** on an unstable surface and then completely removing foot support. Chick **10** is dropped into a funnel **38** which sits on cup **40** whose upper edge **42** extends outwards. Note that cup **40** is the cup that is transported by endless chain **32** in Figure 3. Chick **10**, while in cup **40** stands on a free-moving ball **43**. When cup **40** is lowered, foot support is removed from chick **10**. Chick **10**, therefore, loses its equilibrium, spreads its wings, and falls back into the cup. The wings of chick **10** remain spread out on edge **42**.

At each camera station **35**, light source **44** shines light **46** on chick **10** whose wings are spread (box **18** in Fig. 2). Preferably, light source **44** radiates a blue monochromatic light to enhance the contrast between chick **10**'s white wing tips and yellow body. A preferred example of light source **44** is a light emitting diode with a visible spectrum centered around 470 nm. A camera **48**, preferably digital, takes one picture of the spread wing tips of chick **10** at a shutter speed of, for example, 1/10,000 (box **20** in Fig. 2).

The image taken by camera **48** is processed and sex identification is attempted based on the sex distinguishable wing feather patterns. (Fig. 2, box **22**). There are three possible outcomes of the sex identification process. First, chick **10** is identified as male. Second, chick **10** is identified as female. Third, the sex of chick **10** is unidentifiable. The sex may be unidentifiable due to either a genetic problem or because the wings were not spread.

Chick **10** is removed from camera station **35**, weighed at weighing station **36** (box **24**), counted and routed to the correct chick container based on its sex and weight at sorting area **37** (box **26** in Fig. 2). Chick **10** is released into the correct container either by overturning cup **40** or opening the bottom of cup **40**. In the case of egg laying chicks **10**, male and unidentified chicks **10** are separated from female chicks **10**. In the case of broiler chicks **10**, separate containers are established for male, female and unidentified chicks **10**. If the sex of a significant number of chicks **10** was not identified, this batch of unidentified chicks **10** could be re-sexed. Once a chick container is filled, it is processed based on its ultimate destination (Fig. 2 box **28**).

It should be apparent to those skilled in the art that multiple chicks **10** can be processed simultaneously, provided more than one station of identical purpose is available.

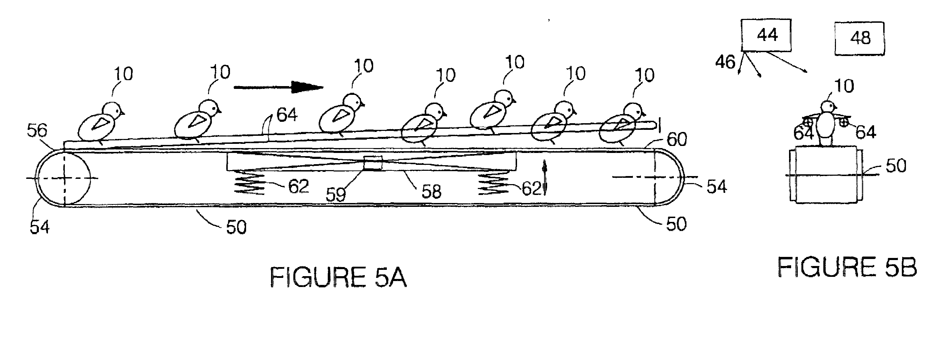

Another possible method of causing chick disequilibrium is shown in Figure 5. A conveyer belt **50** includes an endless belt **52** supported and moved by rollers **54** in the conventional manner. A chick **10** is placed on the left end **56** of conveyer belt **50**. Rollers **54** rotate clockwise, to move the upper surface of endless belt **52** rightward, thereby transporting chick **10** rightward. A mechanical vibrator **58** attached to the upper surface **60** of conveyer belt **50** contains a number of springs **62**, of which two are shown in Figure 5. Mechanical vibrator **58** includes an electric motor **59** which rotates causing springs **62** to move up and down, and upper surface **60** to vibrate up and down. Two poles **64**, parallel to conveyer belt **50**, extend along the length of conveyer belt **50** sloping upwards to the right. Due to the vibrating motion of upper surface **60**, chick **10** loses its equilibrium, jumps up and spreads its wings. Chicks **10** that have jumped up are shown in phantom. Poles **64** support the spread wings while light **46** shines on the wing tips of chick **10** and camera **48** photographs the wings tips of chick **10**. Note that the characteristics of light **46** and camera **48** were described above.

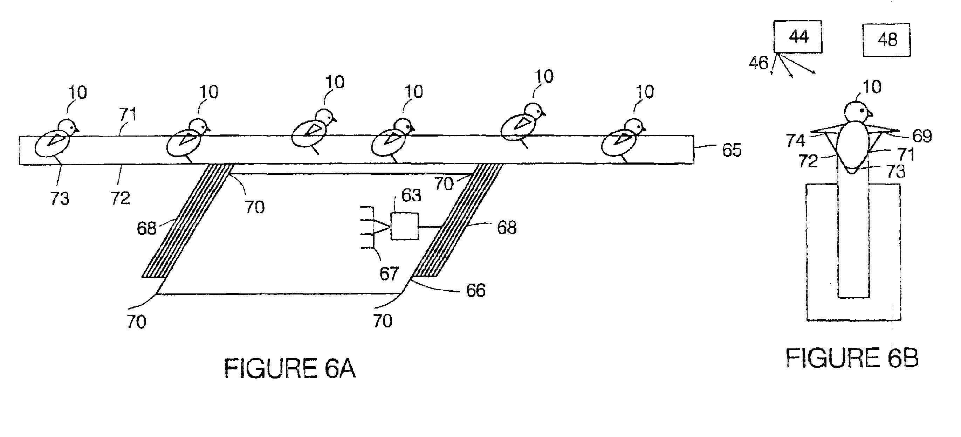

Figure 6 shows an alternative method of causing chick disequilibrium. An oscillator **66** includes one or more springs **67** and a pneumatic piston or electromagnetic device **63**. Oscillator **66** is attached to a bottom surface **73** on which chick **10** stands. Side surfaces **71** and **72** are connected to bottom surface **73**. It should be apparent that a passageway **65** through which chicks **10** can move is composed of surfaces **73**, **72**, and **71**. The two parallel sides **68** of oscillator **66** sway right and left in tandem about their pivots **70**, causing bottom surface **73** and side surfaces **71** and **72** to move right and left. The movement of parallel sides **68** and therefore also of surfaces **73**, **71**, and **72** is faster to the right than to the left. Due to the movement of surfaces **73**, **71**, and **72**, chick **10** jumps up, spreads its wings and land more rightward on bottom surface **73**. Chicks **10** that have jumped up are shown in phantom The top edges **69** and **74** of surfaces **71** and **72** support the spread wings of chick **10** while light **46** shines on the wing tips of chick **10** and camera **48** photographs the wings tips of chick **10**. Note that the characteristics of light **46** and camera **48** were described above.

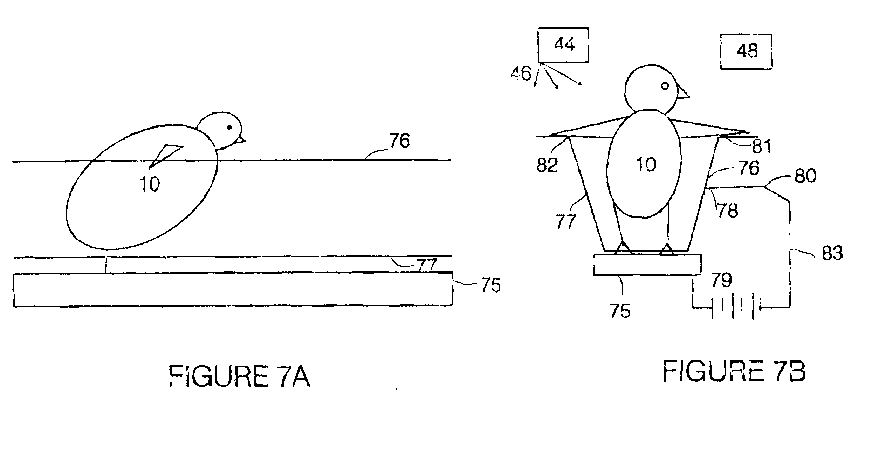

An alternative method of causing chick disequilibrium is shown in Figure 7. A chick **10** is connected to a source of electric voltage **80**. Chick **10** stands on an electrically conducting surface **75**. Chick **10** is bounded on two sides by electrically conducting surfaces **76** and **77**. Note that surface **75** is insulated from surfaces **76** and **77**. The negative potential **78** of an electric voltage source **74** is connected to surface **76** and the positive potential **79** of electric voltage source **74** is connected to surface **75**. Once a switch **83** is turned on, the electric shock causes chick **10** to lose its equilibrium, jump up and spread its wings. The top edges **81** and **82** of surfaces **76** and **77** support the spread wings of chick **10**.

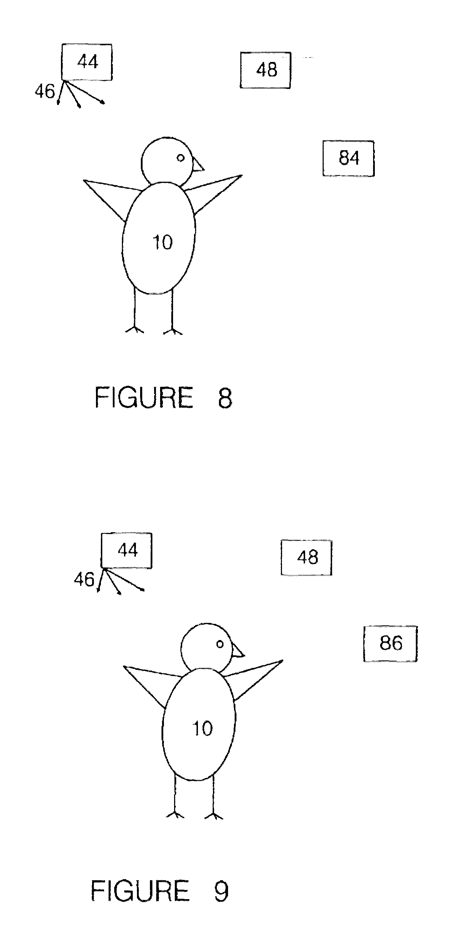

An alternative method of causing chick disequilibrium is illustrated in Figure 8. Figure 8 shows chick **10** moved into close proximity to a source of acoustic shock **84**. The acoustic shock from source **84** causes chick **10** to lose its equilibrium and spread its wings.

Figure 9 shows an alternative method of causing chick disequilibrium. Figure 9 illustrates chick **10** moved into close proximity to a source of heat **86**. The heat from source **86** causes chick **10** to lose its equilibrium and spread its wings. In each of these described methods, light **46** shines on the spread wing tips of chick **10** and camera **48** photographs the spread wings tips of chick **10**. Note that the characteristics of light **46** and camera **48** were described above.

While the invention has been described with respect to a limited number of embodiments, it will be appreciated that many variations, modifications and other applications of the invention may be made.

## Claims

1. A method of sexing a chick, comprising the step of:
(a) causing the chick to lose equilibrium, thereby voluntarily spreading wings thereof.
(b) illuminating at least one spread out wing of the chick and
(c) photographing said at least one spread out wing of the chick.

2. The method of claim 1, wherein said causing includes removing a foot support of the chick.

3. The method of claim 1, wherein said causing includes inducing the chick to jump.

4. The method of claim 1, wherein said causing includes placing the chick on an unstable surface.

5. The method of claim 1, wherein said causing includes shaking the chick.

6. The method of claim 1, wherein said causing includes applying an electric voltage to the chick.

7. The method of claim 1, wherein said causing includes placing the chick in proximity to a source of acoustic shock.

8. The method of claim 1, wherein said causing includes placing the chick in proximity to a source of heat.

9. The method of claim 1, wherein said illumination is effected using blue light.

10. The method of claim 1, wherein said camera is digital.

11. The method of claim 1, wherein said photographing produces an image, further comprising the step of:
(d) inferring a sex of the chick from said image.

12. The method of claim 11, further comprising the step of:
(e) weighing the chick.

13. The method of claim 12, further comprising the step of:
(f) processing the chick based on said weight and inferred sex.

14. An apparatus used to cause a chick to lose equilibrium thereof, comprising:
(a) a cup having a rim;
(b) a funnel, removably seated on said rim; and
(c) a ball inside said cup, and free to roll inside said cup.

15. An apparatus used to cause a chick to lose equilibrium and spread wings thereof, comprising:
(a) a conveyer belt for transporting the chick in a certain direction;
(b) a mechanical vibrator for vibrating a surface of the conveyer belt whereon the chick stands; and
(c) two poles substantially parallel to said direction, for supporting the spread wings.

16. The apparatus of claim 15, wherein said poles are sloped relative to said conveyer belt.

17. An apparatus used to cause a chick to lose equilibrium and spread wings thereof, comprising:
(a) a bottom surface whereon the chick stands
(b) a mechanism for oscillating said bottom surface; and
(c) two side surfaces attached to said bottom surface for supporting the spread wings.
